# EUROPEAN PATENT APPLICATION

(11) **EP 1 067 517 A1**
(43) Date of publication of application: **10.01.2001**
(21) Application number: 00114293.4
(22) Date of filing: 04.07.2000
(51) Int. Cl.: G11B 5/70, G11B 5/716, G11B 5/706

(54) **Magnetic recording medium**

(30) Priority: 05.07.1999 JP 19069199
(71) Applicant: SONY CORPORATION, Tokyo (JP)
(72) Inventor: Meguro, Masashi, c/o SONY CORPORATION, Tokyo (JP); Inoue, Makoto, c/o SONY CORPORATION, Tokyo (JP)
(74) Representative: MÜLLER & HOFFMANN Patentanwälte

(57) **Abstract**

A magnetic recording medium incorporating a magnetic layer constituted by applying a magnetic coating material, wherein product Mr·δ of residual magnetization amount Mr of the magnetic layer and thickness δ of the same is 0.8 memu/cm² to 6.5 memu/cm².

## Description

### BACKGROUND OF THE INVENTION

### Field of the Invention

The present invention relates to a magnetic recording medium incorporating a magnetic layer constituted by applying a so-called magnetic coating material, and more particular to a magnetic recording medium for use in a helical scan magnetic recording system which incorporates a magnetoresistance effect reproducing head.

### Description of the Related Art

A recording medium for use in an audio apparatus, a video apparatus, a computer apparatus or the like includes a so-called coating type magnetic recording medium. The coating type magnetic recording medium incorporates a magnetic layer constituted by coating a non-magnetic support member with a magnetic coating material prepared by kneading and dispersing magnetic powder, a binder and various additives in organic solvent and by drying the magnetic coating material. The coating type magnetic recording medium having excellent productivity and general-purpose properties has become mainstream of recording mediums of the foregoing type.

A recording/reproducing apparatus incorporating a magnetic head, such as an inductive head, is used to record/reproduce data with respect to the magnetic recording medium. The size and weight reduction, improvement in the image quality and elongation of long time operation of the recording/reproducing apparatus have been attempted in recent years. Therefore, also the coating type magnetic recording medium is required to realize high-density recording.

To enable a recording/reproducing system incorporating the inductive head to perform a high-density recording operation, the coating type magnetic recording medium is arranged to use magnetic powder exhibiting a high saturated magnetic flux density and composed of fine grains. The magnetic powder of the foregoing type has been metal magnetic powder mainly composed of iron as a substitute for conventional magnetic powder composed of iron oxide.

As compared with iron-oxide magnetic powder, the metal magnetic powder having a high saturated magnetic flux density is suitable for high-density recording. The metal magnetic powder has a composition mainly composed of iron and cobalt added to iron. Thus, the saturated magnetic flux density of the metal magnetic powder can be raised. Therefore, use of magnetic powder of the foregoing type enables the magnetic recording medium to have a high saturated magnetic flux density. As a result, a recording/reproducing system incorporating the inductive head is able to perform high-density recording.

As described above, the coating type magnetic recording medium is able to realize a high saturated magnetic flux density when it is adapted to the recording/reproducing system incorporating the inductive head. When the coating type magnetic recording medium is reproduced by a magnetoresistance effect reproducing head (a MR head), an excessively large quantity of generated magnetic flux causes the MR head to deviate from a region in which linearity can be maintained. Hence it follows that a satisfactory characteristic free from any distortion cannot be obtained.

### SUMMARY OF THE INVENTION

In view of the foregoing, an object of the present invention is to provide a magnetic recording medium incorporating a magnetic layer arranged to have optimum thickness and amount of residual magnetization to be suitable for a MR head and adapted to, for example, a helical scan system incorporating the MR head so as to be capable of constituting a recording system exhibiting a significantly high recording density.

The magnetic recording medium according to the present invention incorporates the magnetic layer constituted by applying a magnetic coating material and arranged to reduce the amount of residual magnetization so as to be suitable for the characteristic of the MR reproducing head.

According to one aspect of the present invention, there is provided a magnetic recording medium comprising: a magnetic layer constituted by applying a magnetic coating material, wherein product Mr·δ of residual magnetization amount Mr of the magnetic layer and thickness δ of the same is 0.8 memu/cm² to 6.5 memu/cm².

When the product Mr·δ of the residual magnetization amount Mr of the magnetic layer and thickness δ of the same satisfies the foregoing range, reproduction of a signal is performed in a region in which the MR reproducing head maintains linearity. Therefore, characteristics free from any distortion can be obtained.

Other objects, features and advantages of the invention will be evident from the following detailed description of the preferred embodiments described in conjunction with the attached drawings.

### BRIEF DESCRIPTION OF THE DRAWINGS

Fig. 1 is a perspective view showing an example of the schematic structure of a rotational drum unit arranged to be mounted on a helical scan magnetic recording magnetic recording/reproducing apparatus;
Fig. 2 is a plan view showing the schematic structure of an example of a tape delivery mechanism including the rotational drum unit;
Fig. 3 is a cross sectional view showing the internal structure of the rotational drum unit;
Fig. 4 is a diagram showing the schematic structure of circuits for the rotational drum unit and its peripheral circuits;
Fig. 5 is a partially-cut perspective view showing an example of a MR head arranged to be mounted on the rotational drum; and
Fig. 6 is a schematic view showing a state where a signal is reproduced from a magnetic tape by operating the MR head.

### Detailed Description of the Preferred Embodiments

An embodiment of a magnetic recording medium according to the present invention will now be described with reference to the drawings.

The magnetic recording medium according to the present invention incorporates a magnetic layer constituted by coating a non-magnetic support member with a magnetic coating material. The magnetic coating material is prepared by kneading and dispersing, for example, magnetic powder, a binder and so forth in organic solvent. The magnetic layer of the magnetic recording medium is arranged such that the type of contained magnetic powder, a mixture ratio of the magnetic powder and the binder and the types and mixture ratios of employed additives are controlled. Thus, saturation of the magnetoresistance effect reproducing head (hereinafter called an "MR reproducing head") can be prevented and a maximum output can be obtained. Specifically, the product Mr·δ of the residual magnetization amount Mr of the magnetic layer and thickness δ of the same is 0.8 memu/cm² to 6.5 memu/cm².

When the product Mr·δ is lower than 0.8 memu/cm², a satisfactorily large reproduction output cannot be obtained. When the foregoing product is higher than 6.5 memu/cm², the MR reproducing head is undesirably be saturated. Thus, distortion occurs.

When the foregoing range is satisfied, the thickness δ and the residual magnetization amount Mr may arbitrarily be determined. When each of the thickness δ and the residual magnetization amount Mr is too small, the product Mr·δ cannot easily be made to be 0.8 menu/cm² or higher. When each of the thickness δ and the residual magnetization amount Mr is too large, distortion occurs.

It is preferable that the inplane coercive force of the magnetic layer is 1400 Oe or higher to realize a low noise state and high resolution. When the coercive force is too large, a satisfactory recording operation cannot be performed. That is, the reproduction output is reduced.

The magnetic layer contains magnetic powder made of a material exemplified by γ-Fe₂O₃, Co-contained γ-Fe₂O₃, Co-coated γ-Fe₂O₃, CrO₂ and ferrite represented by magnetite, that is Fe₃O₄, Co-contained Fe₃O₄ and Co-coated Fe₃O₄. Note that metal magnetic powder may be employed. The metal magnetic powder is exemplified by metal powder of Fe or Co and alloy powder mainly composed of Fe, Ni or Co, which is exemplified by Fe-Al, Fe-Al-Ni, Fe-Al-Zn, Fe-Al-Co, Fe-Al-Ca, Fe-Ni, Fe-Ni-Al, Fe-Ni-Co, Fe-Ni-Si-Al-Mn, Fe-Ni-Si-Al-Zn, Fe-Al-Si, Fe-Ni-Zn, Fe-Ni-Mn, Fe-Ni-Si, Fe-Mn-Zn, Fe-Co-N-P and Ni-Co.

In particular, Fe type ferromagnetic powder exhibits an excellent electromagnetic conversion characteristic. From viewpoints of realizing satisfactory corrosion resistance and dispersion easiness, it is preferable that ferromagnetic powder of any one of the following Fe-Al materials is employed: Fe-Al, Fe-Al-Ca, Fe-Al-Ni, Fe-Al-Zn, Fe-Al-Co, Fe-Ni-Si-Al-Zn and Fe-Ni-Si-Al-Mn.

The magnetic layer contains the binder made of a material exemplified by polyurethane resin, polyester resin and vinyl chloride resin, such as vinylchloride copolymer. The foregoing binder may be employed solely or the binders may be mixed. Moreover, the following resin may simultaneously be employed. The following resin having weight average molecular weight of 5,000 to 200,000 may simultaneously be employed: vinylchloride-vinylacetate copolymer; vinylchloride-acrylonitrile copolymer; butadiene-acrylonitrile copolymer, polyamide resin, polyvinyl butyral. cellulose derivative (nitrocellulose and the like), styrene-butadiene copolymer, phenol resin, epoxy resin, urea resin, melamine resin, phenoxy resin, silicon resin, acrylic resin, ureaformamide resin and a variety of synthetic rubber resin materials.

The solvent arranged to be contained in the magnetic coating material is solvent of a type which is usually employed when a magnetic recording medium is manufactured. The solvent is exemplified by ketone, such as acetone, methylethyl ketone, methyl isobutyl ketone or cyclohexane; alcohol, such as methanol, ethanol, propanol or butanol; ester, such as methyl acetate, ethyl acetate, butyl acetate, ethyl lactate or ethylene glycol cenoacetate; ether, such as glycol dimethylether, glycol monoethylether, dioxane or tetrahydrofuran; and aromatic hydrocarbon, such as benzene, toluene or xylene. The foregoing solvent material may be employed solely or two or types of the solvent materials may be mixed.

Moreover, the magnetic layer may contain an abrasive, a hardening material and an antistatic agent as well as the magnetic powder and the binder.

When the magnetic coating material is prepared from the foregoing raw materials, a kneader or a dilution dispersing machine may be employed. The kneader is operated in a kneading step for intensely shearing and dispersing magnetic powder containing a relatively large quantity of solid materials in a mixed material containing the binder. The dilution dispersing machine is operated in a dilution dispersing step for using impact force of beads or the like to disperse magnetic powder containing a relatively small quantity of solid materials in a mixed material containing the binder.

The kneader and the dilution dispersing machine may be known machines. Specifically, the kneader may be a continuous biaxial kneader (an extruder), co-kneader or a pressure kneader. The dilution dispersing machine may be a vertical sandmill, a lateral sandmill, a spike mill, a pearl mill or a double-cylinder pearl mill.

The prepared magnetic coating material is applied to the surface of a non-magnetic support member, and then the non-magnetic support member is dried. Thus, the magnetic layer is formed.

The non-magnetic support member is constituted by, for example, polyester, such as polyethylene terephthalate or polyethylene-2, 6-naphthalate; polyolefin, such as polypropylene; cellulose, such as cellulose acetate or cellulose diacetate; or plastic, such as polyamide, aramide or polycarbonate. The non-magnetic support member may have a single-layer structure or a multilayer structure. The surface of the non-magnetic support member may be subjected to surface treatment, such as a corona discharge process. An organic substance layer, such as an easy-adhesion layer, may be provided for the non-magnetic support member.

The prepared magnetic coating material is applied to the surface of the non-magnetic support member by using, for example, a reverse roll, a gravure roll, an air-doctor coater, a blade coaler, an air-knife coater, a squeeze coaler, an impregnation coater, a transfer coater, a kiss-coater, a cast coater or a spray coater.

Although the magnetic recording medium incorporates the magnetic layer constituted by applying the magnetic coating material to the non-magnetic support member, the present invention is not limited to the foregoing structure. That is, the magnetic recording medium according to the present invention may have a structure that its non-magnetic support member is simultaneously coated with both of a non-magnetic coating material and a magnetic coating material such that the materials are overlaid. Moreover, the non-magnetic coating material and the magnetic coating material are dried so that the non-magnetic layer and the magnetic layer are, in this order, laminated on the non-magnetic support member.

The magnetic recording medium according to the present invention is suitable for a magnetic tape adapted to a helical scan magnetic recording system incorporating the MR reproducing head.

In the foregoing case, the MR reproducing head is a shield MR head incorporating a MR head sandwiched by shields, the MR reproducing head being mounted on a rotational drum to constitute a recording/reproducing apparatus.

When the helical scan magnetic recording system incorporating the MR reproducing head and the magnetic recording medium according to the present invention are combined with each other, a recording system exhibiting a high density not heretofore attained can be constituted.

The magnetic recording/reproducing apparatus of the helical scan magnetic recording system incorporates the rotational drum which is operated when recording/reproducing is performed. The reproducing magnetic head which is mounted on the rotational drum is the MR head.

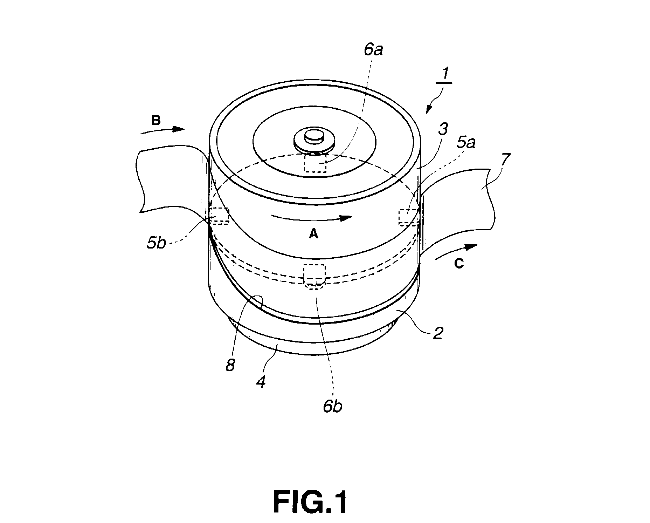

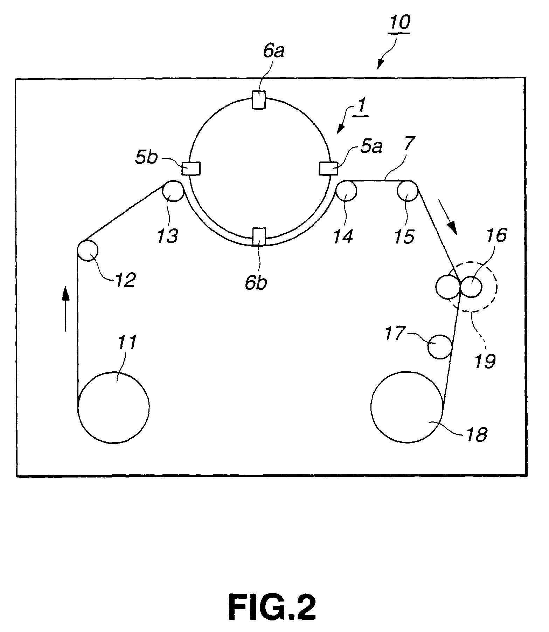

An example of the structure of a rotational drum unit which is mounted on the magnetic recording/reproducing apparatus is shown in Figs. 1 and 2. Fig. 1 is a perspective view showing the schematic structure of a rotational drum unit 1. Fig. 2 is a plan view schematically showing the structure of a magnetic-tape delivery mechanism 10 including the rotational drum unit 1.

As shown in Fig. 1, the rotational drum unit 1 incorporates a cylindrical stationary drum 2, a cylindrical rotational drum 3, a motor 4 for rotating the rotational drum 3, a pair of inductive magnetic heads 5a and 5b mounted on the rotational drum 3 and a pair of MR heads 6a and 6b mounted on the rotational drum 3.

The stationary drum 2 is a drum which is held such that rotation of the stationary drum 2 is inhibited. A lead guide 8 is formed on the side surface of the stationary drum 2 in a direction in which the magnetic tape 7 is moved. As described later, the magnetic tape 7 is moved along the lead guide 8 when recording/reproducing is performed. A rotational drum 3 is disposed in such a manner that the central axis coincides with that of the stationary drum 2.

The rotational drum 3 is a drum arranged to be rotated at predetermined rotational speed by the motor 4 when a recording/reproducing operation of the magnetic tape 7 is performed. The rotational drum 3 is formed into a cylindrical shape having the substantially the same diameter as that of the stationary drum 2. The rotational drum 3 is disposed in such a manner that the central axis of the rotational drum 3 coincides with that of the stationary drum 2. A pair of inductive magnetic heads 5a and 5b and a pair of MR heads 6a and 6b are mounted on the portion of the rotational drum 3 opposite to the stationary drum 2.

The inductive magnetic heads 5a and 5b are recording magnetic heads incorporating a pair of magnetic cores joined to each other through a magnetic gap. Moreover, a coil is wound around each magnetic core. When a signal is recorded on the magnetic tape 7, the inductive magnetic heads 5a and 5b are operated. The inductive magnetic heads 5a and 5b are mounted on the rotational drum 3 to make an angle of 180° between the inductive magnetic heads 5a and 5b with respect to the center of the rotational drum 3. Moreover, the magnetic gap portion of each of the inductive magnetic heads 5a and 5b projects over the outer surface of the rotational drum 3. The inductive magnetic heads 5a and 5b have opposite azimuth angles to perform azimuth recording with respect to the magnetic tape 7.

The MR heads 6a and 6b are reproducing magnetic heads incorporating MR devices which are magnetosensitive devices for detecting a signal from the magnetic tape 7. When a signal is reproduced from the magnetic tape 7, the MR heads 6a and 6b are operated. The MR heads 6a and 6b are mounted on the rotational drum 3 to make an angle of 180° between the MR heads 6a and 6b with respect to the center of the rotational drum 3. Moreover, the magnetic gap portion of each of the MR heads 6a and 6b projects over the outer surface of the rotational drum 3. The MR heads 6a and 6b have opposite azimuth angles to perform azimuth recording with respect to the magnetic tape 7.

The magnetic recording/reproducing apparatus causes the magnetic tape 7 to slide along the rotational drum unit 1 to record a signal on the magnetic tape 7 and reproduce a signal from the magnetic tape 7.

When recording/reproducing is performed, the magnetic tape 7 is, as shown in Fig. 2, delivered from the supply reel 11 to pass through guide rollers 12 and 13 so as to be wound around the rotational drum unit 1. Thus, recording/reproducing is performed by the rotational drum unit 1. The magnetic tape 7, to which recording/reproducing has been performed by the rotational drum unit 1, is allowed to pass through guide rollers 14 and 15, a capstan 16 and a guide roller 17 so as to be moved to a windup roll 18. That is, the magnetic tape 7 is, under a predetermined tension and at predetermined speed, moved by a capstan 16 which is rotated by a capstan motor 19 to pass through the guide roller 17 so as to be wound around the windup roll 18.

At this time, the rotational drum 3 is rotated by the motor 4 as indicated with an arrow A shown in Fig. 1. On the other hand, the magnetic tape 7 is, along the lead guide 8 of the stationary drum 2, moved to diagonally slide on the stationary drum 2 and the rotational drum 3. That is, the magnetic tape 7 is moved along the lead guide 8 to slide the stationary drum 2 and the rotational drum 3 from the tape inlet portion, as indicated with an arrow B shown in Fig. 1. Then, the magnetic tape 7 is moved to the tape outlet portion as indicated with an arrow C shown in Fig. 1.

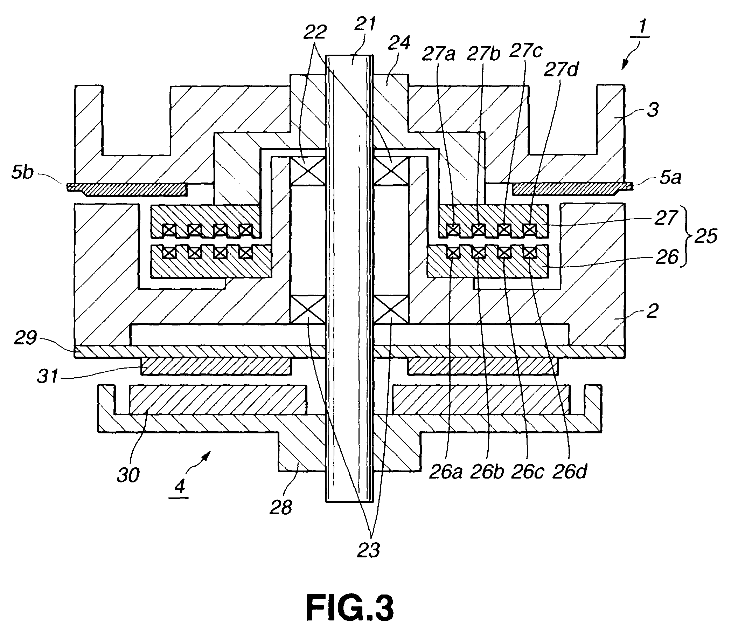

The internal structure of the rotational drum unit 1 will now be described with reference to Fig. 3.

As shown in Fig. 3, a rotational shaft 21 is inserted into the central portion of the stationary drum 2 and the rotational drum 3. Note that the stationary drum 2, the rotational drum 3 and the rotational shaft 21 are constituted by a conductive material and electrically connected to one another. The stationary drum 2 is grounded.

Two bearings 22 and 23 are disposed on the inside of the sleeve of the stationary drum 2. Thus, the rotational shaft 21 is rotatively supported by the stationary drum 2. That is, the rotational shaft 21 is rotatively supported by the stationary drum 2 by the bearings 22 and 23. On the other hand, the rotational drum 3 has a flange 24 formed on the inner surface thereof. The flange 24 is secured to the upper end of the rotational shaft 21. Hence it follows that the rotational drum 3 is rotated when the rotational shaft 21 is rotated.

The rotational drum unit 1 includes a rotary transformer 25, which is a non-contact signal transmission unit, for communicating a signal between the stationary drum 2 and the rotational drum 3. The rotary transformer 25 incorporates a stator core 26 joined to the stationary drum 2 and rotor core 27 joined to the rotational drum 3.

The stator core 26 and the rotor core 27 are constituted by a magnetic material, such as, ferrite, formed into annular shapes around the rotational shaft 21. The stator core 26 incorporates a pair of signal-transmission rings 26a and 26b corresponding to the pair of the inductive magnetic heads 5a and 5b; a signal-transmission ring 26c corresponding to the pair of the MR heads 6a and 6b; and an electric-powder transmission ring 26d for supplying electric power required to operate the pair of the MR heads 6a and 6b such that the foregoing rings are concentrically disposed. Similarly, a pair of signal-transmission rings 27a and 27b corresponding to the pair of the inductive magnetic heads 5a and 5b, a signal-transmission ring 27c corresponding to the pair of the MR heads 6a and 6b and an electric-power transmission ring 27d for supplying electric power required to operate the pair of the MR heads 6a and 6b are disposed concentrically.

The rings 26a, 26b, 26c, 26d, 27a, 27b, 27c and 27d are constituted by coils annularly wound around the rotational shaft 21. The rings 26a, 26b, 26c and 26d of the stator core 26 and the rings 27a, 27b, 27c and 27d of the rotor core 27 are disposed opposite to one another. The rotary transformer 25 is arranged such that signals and electric power are exchanged in a non-contact manner between the rings 26a, 26b, 26c and 26d of the stator core 26 and the rings 27a, 27b, 27c and 27d of the rotor core 27.

The motor 4 for rotating the rotational drum 3 is joined to the rotational drum unit 1. The motor 4 incorporates a rotor 28 which is a rotational portion and a stator 29 which is a stationary portion. The rotor 28 is joined to the lower end of the rotational shaft 21 and provided with an operating magnet 30. On the other hand, the stator 29 is joined to the lower end of the stationary drum 2 and provided with an operating coil 31. When an electric current is supplied to the operating coil 31, the rotor 28 is rotated. It leads to a fact that the rotational shaft 21 joined to the rotor 28 is rotated. Hence it follows that the rotational drum 3 secured to the rotational shaft 21 is rotated.

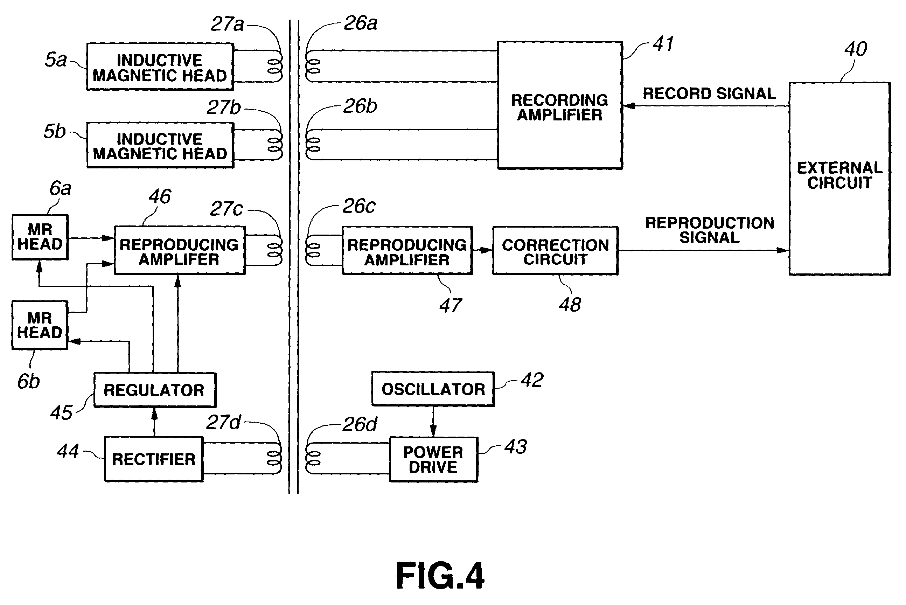

A recording/reproducing operation which is performed by the rotational drum unit 1 will now be described with reference to Fig. 4 which schematically shows the structure of circuits for the rotational drum unit 1 and its peripheral circuit.

When a signal is recorded on the magnetic tape 7 by operating the rotational drum unit 1, an electric current is supplied to the operating coil 31 of the motor 4. Thus, the rotational drum 3 is rotated. In a state where the rotational drum 3 is being rotated, a signal which must be recorded is supplied from an external circuit 40 to a recording amplifier 41, as shown in Fig. 4.

The recording amplifier 41 amplifies a signal which must be recorded and which has been supplied from the external circuit 40. Then, the recording amplifier 41 supplies the signal, which must be recorded, to the signal-transmission ring 26a of the stator core 26 corresponding to the inductive magnetic head 5a at timing at which the signal is recorded by the inductive magnetic head 5a of the inductive magnetic heads 5a and 5b. At timing at which a signal is recorded by the other inductive magnetic head 5b, the recording amplifier 41 supplies a signal which must be recorded to the signal-transmission ring 26b of the stator core 26 corresponding to the inductive magnetic head 5b.

As described above, the pair of the inductive magnetic heads 5a and 5b are disposed to make the angle of 180° between the inductive magnetic heads 5a and 5b with respect to the central portion of the rotational drum 3. Therefore, the inductive magnetic heads 5a and 5b record the signal with a phase difference of 180°. That is, the recording amplifier 41 performs switching of timing between timing at which the signal which must be recorded is supplied to the inductive magnetic head 5a and timing at which the signal is supplied to the other inductive magnetic head 5b such that switching is performed with the phase difference of 180°.

The signal, which must be recorded, and which has been supplied to the signal-transmission ring 26a of the stator core 26 corresponding to the inductive magnetic head 5a is, in a non-contact manner, transmitted to the signal-transmission ring 27a of the rotor core 27. The signal supplied to the signal-transmission ring 27a of the rotor core 27 is supplied to the inductive magnetic head 5a. Thus, the signal is recorded on the magnetic tape 7 by the inductive magnetic head 5a.

Similarly, the signal which must be recorded and which has been supplied to the signal-transmission ring 26b of the stator core 26 corresponding to the inductive magnetic head 5b is, in a non-contact manner, transmitted to the signal-transmission ring 27b of the rotor core 27. The signal transmitted to the signal-transmission ring 27b of the rotor core 27 is supplied to the inductive magnetic head 5b. Thus, the signal is recorded on the magnetic tape 7 by the inductive magnetic head 5b.

When a signal is reproduced from the magnetic tape 7 by operating the rotational drum unit 1, an electric current is supplied to the operating coil 31 of the motor 4. Hence it follows that the rotational drum 3 is rotated. In a state where the rotational drum 3 is being rotated, a high-frequency electric current is supplied from an oscillator 42 to a power drive 43, as shown in Fig. 4.

The high-frequency electric current supplied from the oscillator 42 is transformed into a predetermined alternating current by the power drive 43. Then, the alternating current is supplied to the electric-powder transmission ring 26d of the stator core 26. The alternating current supplied to the electric-powder transmission ring 26d of the stator core 26 is, in a non-contact manner, transmitted to the electric-power transmission ring 27d of the rotor core 27. The alternating current transmitted to the electric-power transmission ring 27d of the rotor core 27 is rectified by a rectifier 44 so as to be formed into a direct current which is supplied to a regulator 45. Thus, the supplied direct current is set to have a predetermined voltage level by the regulator 45.

The electric current set to have the predetermined voltage by the regulator 45 is supplied to the pair of the MR heads 6a and 6b as a sense current. A reproducing amplifier 46 for detecting a signal supplied from the MR heads 6a and 6b is connected to the pair of the MR heads 6a and 6b. Therefore, an electric current supplied from the regulator 45 is as well as supplied to the reproducing amplifier 46.

The MR heads 6a and 6b incorporates MR devices each having a resistance value which is changed according to the magnitude of an external magnetic field. The MR device of each of the MR heads 6a and 6b is arranged such that the resistance of the MR device is changed according to the magnetic field of the signal supplied from the magnetic tape 7. Thus, the sense current encounters voltage change.

The reproducing amplifier 46 detects the voltage change to produce a signal corresponding to the voltage change as a reproduction signal. The reproducing amplifier 46 produces a reproduction signal detected by the MR head 6a at timing at which a signal is reproduced by the MR head 6a. At timing at which a signal is reproduced by the other MR head 6b, the reproducing amplifier 46 produces a reproduction signal detected by the MR head 6b.

As described above, the pair of the MR heads 6a and 6b are disposed to make the angle of 180° between the MR heads 6a and 6b with respect to the central portion of the rotational drum 3. Therefore, the MR heads 6a and 6b alternately produce signals with a phase difference of 180°. That is, the reproducing amplifier 46 performs switching of timing between timing at which a reproduction signal is output from the MR head 6a and timing at which a reproduction signal is output from the other MR head 6b with the phase difference of 180°.

The reproduced signal supplied from the reproducing amplifier 46 is supplied to the signal-transmission ring 27c of the rotor core 27. Then, the reproduced signal is, in a non-contact manner, supplied to the signal-transmission ring 26c of the stator core 26. The reproduced signal transmitted to the signal-transmission ring 26c of the stator core 26 is amplified by a reproducing amplifier 47 so as to be supplied to a correction circuit 48. Then, the reproduced signal is subjected to a predetermined correction process so as to be output to the external circuit 40.

When the circuit is structured as shown in Fig. 4, the pair of the inductive magnetic heads 5a and 5b, the pair of the MR heads 6a and 6b, the rectifier 44, the regulator 45 and the reproducing amplifier 46 are mounted on the rotational drum 3 so as to be rotated together with the rotational drum 3. On the other hand, the recording amplifier 41, the oscillator 42, the power drive 43, the reproducing amplifier 47 and the correction circuit 48 are disposed in the stationary portion of the rotational drum unit 1 or formed into external circuits formed individually from the rotational drum unit 1.

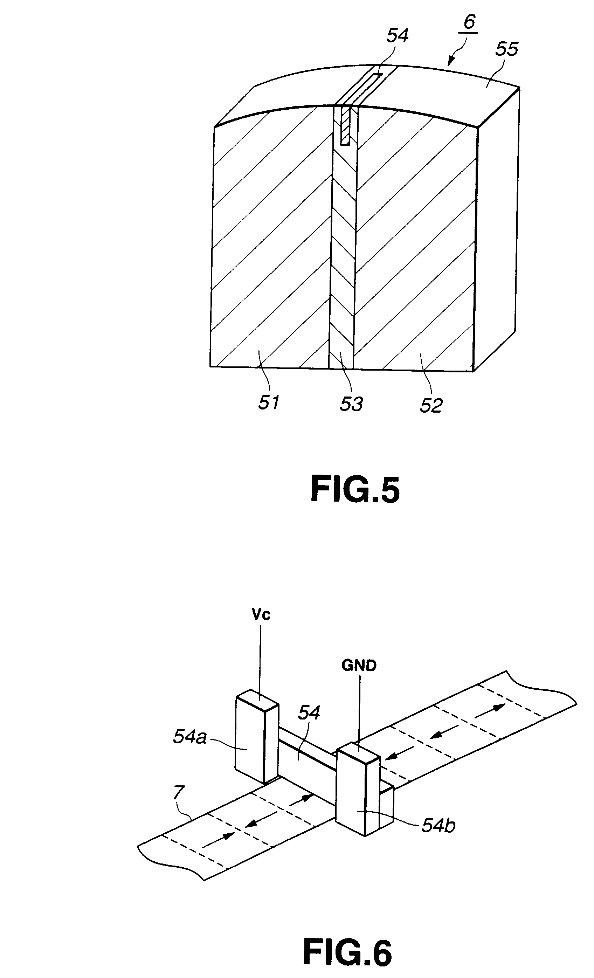

The MR heads 6a and 6b mounted on the rotational drum 3 will now be described with reference to Fig. 5. Note that the MR heads 6a and 6b have the same structure except for the opposite azimuth angles. Therefore, the MR heads 6a and 6b are collectively described hereinbelow as a MR head 6.

The MR head 6 is a reproduction-only magnetic head mounted on the rotational drum 3 and arranged to use the magnetoresistance effect to detect signal supplied from the magnetic tape 7. In general, the MR head exhibits sensitivity superior to that of an inductive magnetic head which uses magnetic induction to perform recording/reproducing and larger reproduction output. Therefore, the MR is suitable for the high-density recording operation. Hence it follows that use of the MR head 6 as the reproducing magnetic head permits high-density recording.

As shown in Fig. 5, the MR head 6 incorporates a pair of magnetic shields 51 and 52 constituted by a soft magnetic material, such as Ni-Zn polycrystal ferrite and a MR device portion 54 sandwiched by the pair of the magnetic shields 51 and 52 through an insulating member 53 and formed into an elongated shape. Note that a pair of terminals extend from the two ends of the MR device portion 54 so that supply of the sense current to the MR device portion 54 is permitted.

The MR device portion 54 has a laminate structure incorporating a MR device having the magnetoresistance effect, a SAL (Soft Adjacent Layer) film and an insulating film disposed between the MR device and the SAL film. The MR device is constituted by a soft magnetic material, such as Ni-Fe, having a resistance value which is changed according to the magnitude of an external magnetic field owing to anisotropic magnetoresistance effect (AMR) thereof. The SAL film is arranged to apply a bias magnetic field to the MR device by a so-called SAL bias method and constituted by a magnetic material, such as permalloy, having a small coercive force and high permeability. The insulating film is arranged to insulate the MR device and the SAL film from each other to prevent electrical shunt current loss and constituted by an insulating material, such as Ta.

The MR device portion 54 is formed into an elongated shape sandwiched by the pair of magnetic shields 51 and 52 through the insulating member 53 such that its one side surface is exposed to a magnetic-tape slide surface 55. Specifically, the MR device portion 54 is sandwiched by the pair of the magnetic shields 51 and 52 through the insulating member 53 in such a manner that the direction of the minor axis of the MR device portion 54 is substantially perpendicular to a magnetic-tape slide surface 55 and the direction of the major axis of the same is substantially perpendicular to the magnetic-tape sliding direction.

The magnetic-tape slide surface 55 of the MR head 6 is polished into a cylindrical shape in the sliding direction of the magnetic tape 7 in such a manner that one side surface of the MR device portion 54 is exposed to the magnetic-tape slide surface 55. Moreover, the magnetic-tape slide surface 55 is polished into the cylindrical shape in the direction perpendicular to the sliding direction of the magnetic tape 7. As a result, the MR device portion 54 of the MR head 6 or a portion adjacent to the MR device portion 54 maximally projects. As described above, the MR device portion 54 or the portion adjacent to the MR device portion 54 maximally projects so that satisfactory contact with the magnetic tape 7 is realized.

When a signal is reproduced from the magnetic tape 7 by using the MR head 6, the magnetic tape 7 is slid along the MR device portion 54 as shown in Fig. 6. Note that an arrow shown in Fig. 6 schematically indicates a state in which the magnetic tape 7 has been magnetized.

In a state where the magnetic tape 7 is slid along the MR device portion 54, the sense current is supplied to the MR device portion 54 through terminal 54a and 54b connected to the two ends of the MR device portion 54. Thus, change in the voltage of the sense current is detected. Specifically, predetermined voltage Vc is applied from the terminal 54a connected to an end of the MR device portion 54. Moreover, the terminal 54b connected to another end of the MR device portion 54 is previously connected to the rotational drum 3. The rotational drum 3 is electrically connected to the stationary drum 2 through the rotational shaft 21, while the stationary drum 2 is grounded. Therefore, the terminal 54b connected to the MR device portion 54 is grounded through the rotational drum 3, the rotational shaft 21 and the stationary drum 2.

When the sense current is previously supplied to the MR device portion 54 in a state where the magnetic tape 7 is selected along the MR device portion 54, the resistance of the MR device of the MR device portion 54 is changed according to the magnetic field supplied from the magnetic tape 7. As a result, the voltage of the sense current is changed. Therefore, detection of change in the voltage of the sense current enables the magnetic field of the signal supplied from the magnetic tape 7 to be detected. As a result, the signal recorded on the magnetic tape 7 is reproduced.

The MR device provided for the MR device portion 54 of the MR head 6 may be a device of a type having the magnetoresistance effect. For example, a giant magnetoresistance effect device (a GMR device) structured by laminating a plurality of thin films to obtain a greater magnetoresistance effect may be employed. The bias magnetic field is applied to the MR device by a method except for the SAL bias method. For example, any one of the following methods may be employed: a permanent magnet bias method, a giant current bias method, a self-bias method, an exchange bias method, a bar-ball method, a divided device method and a servo bias method. As for the giant magnetoresistance effect and the various bias methods, refer to "Base and Application of Magnetoresistance Effect Head, translated by Kazuhiko Hayashi, published by Maruzen.

### Examples

Examples of the present invention will now be described such that results of experiments are described.

### Example 1

In Example 1, needle-shape metal magnetic powder having the following magnetic characteristics was prepared. The magnetic characteristics were measured by using a sample-vibration magnetic force meter (manufactured by Toei).

### Magnetic Characteristic

Coercive Force (Hc) = 2360 Oe
Amount of Saturated Magnetization (σs) = 125 emu/g

Then, each of the following compositions was weighed so as to be kneaded and dispersed so that a magnetic coating material for the upper layer and that for the lower layer were prepared.

### Compositions of Magnetic Coating Material for Upper Layer

| | |
|---|---|
| Magnetic Powder | 100 parts by weight |
| Binder | 20 parts by weight |
| Abrasive: Al₂O₃ | 3 parts by weight |
| Antistatic Agent: carbon powder | 2 parts by weight |
| Methylethyl Ketone | 100 parts by weight |
| Toluene | 100 parts by weight |
| Cyclohexane | 50 parts by weight |

### Composition of Magnetic Coating Material for Lower Layer

| | |
|---|---|
| Magnetic Powder | 100 parts by weight |
| Binder | 20 parts by weight |
| Lubricant | 2 parts by weight |
| Methylethyl Ketone | 100 parts by weight |
| Toluene | 100 parts by weight |
| Cyclohexane | 50 parts by weight |

Then, the magnetic coating materials for the upper and lower layers were stacked and applied to the surfaces a polyethylene terephthalate film. Then, an orienting process was performed, and then the polyethylene terephthalate film was dried. Then, each film was cut to have a width of 8 mm so that each sample tape was manufactured. The thickness of the magnetic layer was 0.03 µm. As a result, the product Mr·δ of the residual magnetization amount Mr of the magnetic layer and thickness δ of the same was 0.8 memu/cm².

The electromagnetic conversion characteristic of each of the manufactured sample tapes was measured. Specifically, a remodeled 8 mm VTR was employed to record an information signal at a recording wavelength of 0.5 µm. Then, a shield MR head was operated to measure reproduction output, the noise level and the error rate.

The MR head device for use in the reproducing operation was a FeNi-AMR (an anisotropic magnetoresistance effect device) having saturated magnetization of 800 emu/cc and a thickness of 40 nm and incorporating shields each of which was constituted by NiZn and disposed apart from one another for a distance of 0.17 µm. The width of the track was 18 µm and the azimuth angle was 25°.

### Examples 2 to 5 and Comparative Examples 1 and 2

In Examples 2 to 5 and Comparative Examples 1 and 2, a process similar to Example 1 was performed except for the thickness δ of the magnetic layer which was controlled to realize products Mr·δ as shown in Table 1. Thus, magnetic recording mediums were manufactured.

### Evaluation of Characteristics

The reproduced output (the recording wavelength was 0.5 µm), the noise level (a level realized at a frequency lowered from the frequency of the carrier signal by 1 MHz) and the error rate (the symbol error rate) of each of Examples 1 to 5 and Comparative Examples 1 and 2 were measured. Results were shown in Table 1.

**Table 1**

| | Mr·δ (×10⁻³emu/cm²) | magnetic powder σs (emu/g) | thickness of coating (µm) |
|---|---|---|---|
| Comparative Example 1 | 0.5 | 125 | 0.02 |
| Example 1 | 0.8 | 125 | 0.03 |
| Example 2 | 1.3 | 125 | 0.05 |
| Example 3 | 2.5 | 125 | 0.1 |
| Example 4 | 5.0 | 125 | 0.2 |
| Example 5 | 6.5 | 125 | 0.25 |
| Comparative Example 2 | 7.5 | 125 | 0.3 |
| | | | |

| | reproduced output (dB) | noise level (dB) | error rate |
|---|---|---|---|
| Comparative Example 1 | -3.2 | -2.1 | 3×10⁻⁴ |
| Example 1 | 0.0 | 0.0 | 5×10⁻⁵ |
| Example 2 | 3.0 | 2.0 | 6×10⁻⁵ |
| Example 3 | 4.2 | 2.3 | 7×10⁻⁵ |
| Example 4 | 5.5 | 2.8 | 7×10⁻⁵ |
| Example 5 | 7.1 | 3.5 | 1×10⁻⁴ |
| Comparative Example 2 | 7.3 (distortion) | 4.4 | 4×10⁻³ |

As can be understood from Table 1, when the products Mr·δ was lower than 0.8 memu/cm², (Comparative Example 1), a satisfactory large reproduction output was not obtained. When the foregoing value was higher than 6.5 memu/cm² (comparative example 2) saturation of the MR device occurred. Thus, the reproduced waveform was distorted, causing the error rate to deteriorate. Therefore, it can be said that the preferred product Mr·δ is 0.8 menu/cm² to 6.5 menu/cm².

### Examples 6 to 9 and Comparative Examples 3 and 4

In Examples 6 to 9 and Comparative Examples 3 and 4, a similar process to that according to Example 1 was performed except for needle-shape metal magnetic powder having the following magnetic characteristics and the thickness δ of the magnetic layer which was controlled to realize products Mr·δ as shown in Table 1. Thus, magnetic recording mediums were manufactured. Note that the magnetic characteristics were value measured by using the sample-vibration magnetic force meter (manufactured by Towa).

### Magnetic Characteristic

Coercive Force (Hc) = 2410 Oe
Amount of Saturated Magnetization (σs) = 150 emu/g

### Evaluation of Characteristics

The reproduced output (the recording wavelength was 0.5 µm), the noise level (a level realized at a frequency lowered from the frequency of the carrier signal by 1 MHz) and the error rate (the symbol error rate) of each of Examples 6 to 9 and Comparative Examples 3 and 4 were measured. Results were shown in Table 2.

**Table 2**

| | Mr·δ (×10⁻³emu/cm²) | magnetic powder σs (emu/g) | thickness of coating (µm) |
|---|---|---|---|
| Comparative Example 3 | 0.6 | 150 | 0.02 |
| Example 6 | 1 | 150 | 0.03 |
| Example 7 | 1.6 | 150 | 0.05 |
| Example 8 | 3 | 150 | 0.1 |
| Example 9 | 6 | 150 | 0.2 |
| Comparative Example 4 | 7.6 | 150 | 0.25 |
| | | | |

| | reproduced output (dB) | noise level (dB) | error rate |
|---|---|---|---|
| Comparative Example 3 | -3 | -2 | 4×10⁻⁴ |
| Example 6 | -0.2 | 0 | 5×10⁻⁵ |
| Example 7 | 3.5 | 2.2 | 5×10⁻⁵ |
| Example 8 | 4.5 | 2.5 | 7×10⁻⁵ |
| Example 9 | 6.8 | 3.2 | 8×10⁻⁵ |
| Comparative Example 4 | 7.4 (distortion) | 4.5 | 3×10⁻³ |

As can be understood from Table 2, when the products Mr·δ was lower than 0.8 memu/cm² (Comparative Example 3), a satisfactory large reproduction output was not obtained. When the foregoing value was higher than 6.5 memu/cm² (comparative example 4), saturation of the MR device occurred. Thus, the reproduced waveform was distorted, causing the error rate to deteriorate. Therefore, it can be said that the preferred product Mr·δ is 0.8 menu/cm² to 6.5 menu/cm².

### Examples 10 to 16

In Examples 10 to 16, a similar process to that according to Example 1 was performed except for an arrangement that the produce Mr·δ was made to be 0.8 menu/cm² to 6.5 menu/cm² and magnetic powder materials having different coercive forces and amounts of saturated magnetization as shown in Table 3 were used. Thus, magnetic recording mediums were manufactured.

### Evaluation of Characteristics

The reproduced output (the recording wavelength was 0.5 µm), the noise level (a level realized at a frequency lowered from the frequency of the carrier signal by 1 MHz) and the error rate (the symbol error rate) of each of Examples 10 to 16 were measured. Results were shown in Table 3.

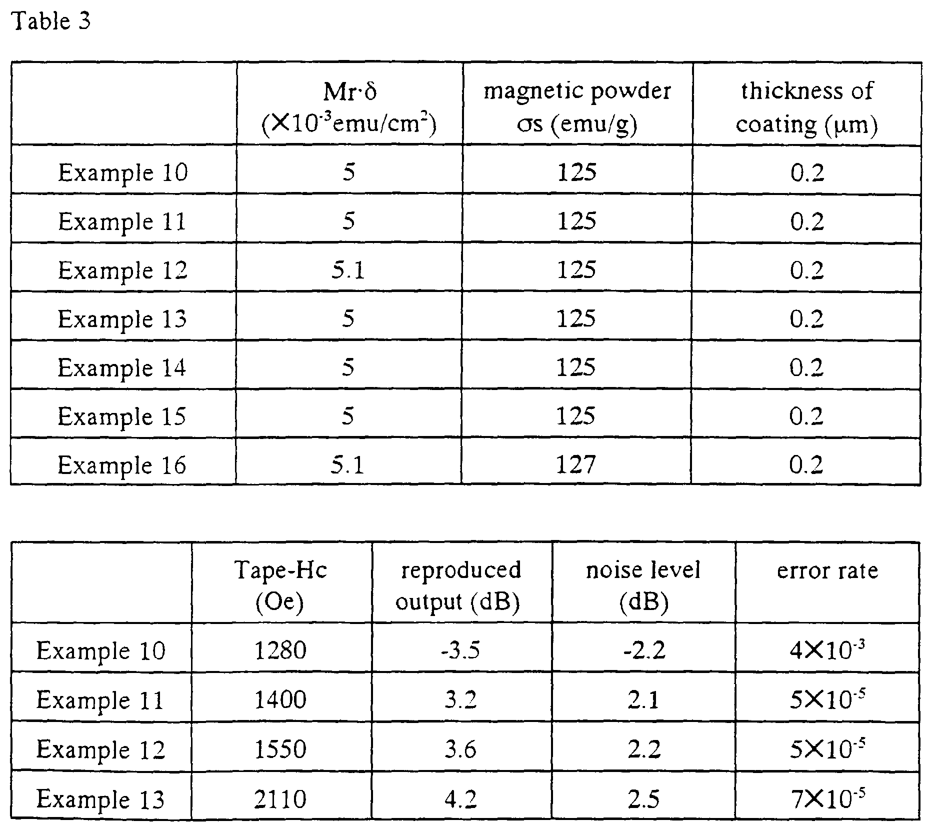

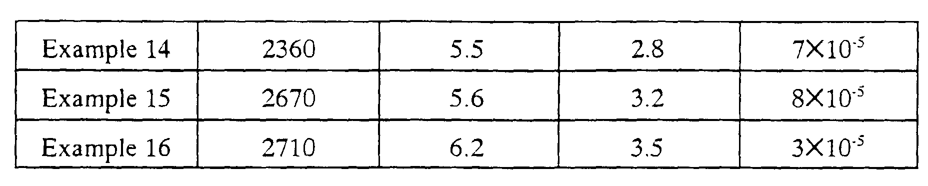

As can be understood from Table 3, when the coercive force of the magnetic layer is smaller than 1400 Oe (Example 10), satisfactory reproduced output, any excellent noise level and excellent error rate cannot be realized. Therefore, it can be said that the preferred coercive force of the magnetic layer is 1400 Oe or greater.

As described above, the present invention has the structure that the product Mr·δ of the residual magnetization amount Mr of the magnetic layer constituted by applying the magnetic coating material and thickness δ of the same is optimized to be adaptable to the characteristics of the MR reproducing head. Therefore, saturation of the MR device can be prevented and high output and low noise can be realized.

When the magnetic recording medium according to the present invention is adapted to the helical scan magnetic recording system incorporating the shield MR reproducing head, a recording system exhibiting a high density not herefore attained can be constituted.

Although the invention has been described in its preferred form and structure with a certain degree of particularity, it is understood that the present disclosure of the preferred form can be changed in the details of construction and in the combination and arrangement of parts without departing from the spirit and the scope of the invention as hereinafter claimed.

## Claims

1. A magnetic recording medium comprising:
a magnetic layer constituted by applying a magnetic coating material, wherein
product Mr·δ of residual magnetization amount Mr of said magnetic layer and thickness δ of the same is 0.8 memu/cm² to 6.5 memu/cm².

2. A magnetic recording medium according to claim 1, wherein inplane coercive force is 1400 Oe or greater.

3. A magnetic recording medium according to claim 1, wherein said magnetic recording medium is employed in a helical scan magnetic recording system which incorporates a magnetoresistance effect reproducing head.
